# EUROPÄISCHE PATENTSCHRIFT

(11) **EP 0 671 015 B1**
(45) Veröffentlichungstag und Bekanntmachung des Hinweises auf die Patenterteilung: **20.01.1999**
(21) Anmeldenummer: 94925351.2
(22) Anmeldetag: 08.09.1994
(51) Int. Cl.: G01S 15/93, G01S 15/02

(54) **EINPARKHILFE MIT RADSENSOR**
PARKING AID INCLUDING A WHEEL-COUPLED SENSOR
DISPOSITIF AUXILIAIRE POURVU D'UN DETECTEUR ACCOUPLE AUX ROUES, FACILITANT LE GARAGE D'UN VEHICULE

(30) Priorität: 30.09.1993 DE 4333357
(43) Veröffentlichungstag der Anmeldung: 13.09.1995
(73) Patentinhaber: ROBERT BOSCH GMBH, 70442 Stuttgart (DE)
(72) Erfinder: WIDMANN, Friedrich, D-10559 Berlin (DE)
(86) Internationale Anmeldenummer: DE9401028
(87) Internationale Veröffentlichungsnummer: WO9509369

(56) Entgegenhaltungen:
- EP-A- 0 048 958
- EP-A- 0 508 146
- US-A- 5 180 214
- PATENT ABSTRACTS OF JAPAN vol. 16, no. 555 (P-1454) 25. November 1992 & JP,A,04 212 086 (TOYOTA MOTOR CORP.) 3. August 1992

## Beschreibung

### Stand der Technik

Die Erfindung geht aus von einer Schaltungsanordnung für ein Kraftfahrzeug mit einem Ultraschallsensor und einer Auswerteschaltung zur Bestimmung des Abstandes eines Kraftfahrzeuges zu einem Hindernis nach der Gattung des Hauptanspruchs. Aus der EP 48 958 B1 ist schon eine Schaltungsanordnung zur Ermittlung und Anzeige der Unterschreitung vorgegebener Mindestabstände zwischen einem Fahrzeug und einem Hindernis bekannt. Bei der als Einparkhilfe verwendeten Schaltungsanordnung sendet ein Ultraschallsensor Schallwellen aus und mißt die Laufzeit des von einem Hindernis reflektierten Echos. Bei dieser Anordnung ist die Messung des Abstandes zum Hindernis nur bei der Annäherung an ein Hindernis bis zu einem gewissen Mindestwert hinreichend genau, da der Sensor bei sehr geringem Abstand zu Hindernissen beispielsweise von der Stoßstange des Fahrzeuges nicht jede Kontur erfassen kann. Dies führt dazu, daß aus Sicherheitsgründen bei einem Abstand von etlichen Zentimetern die Messung abgebrochen oder nicht mehr angezeigt wird. In der Praxis führt das dazu, daß beim Einparken relativ viel Parkplatz verschwendet wird.

### Vorteile der Erfindung

Die erfindungsgemäße Schaltungsanordnung mit den kennzeichnenden Merkmalen des Hauptanspruchs hat demgegenüber den Vorteil, daß der Abstand zu der Fahrzeugkontur mit hinreichender Genauigkeit zu einem Wert nahe 0 cm erfaßt werden kann.

Durch die in den abhängigen Ansprüchen aufgeführten Maßnahmen sind vorteilhafte Weiterbildungen und Verbesserungen der im Hauptanspruch angegebenen Schaltungsanordnung möglich. Besonders vorteilhaft ist, daß die Messung des Abstandes oberhalb eines vorgegebenen Grenzwertes durch die Ultraschallmessung erfolgt. Diese Messung ist unabhängig von Lenkbewegungen und erfaßt damit stets den kürzesten Abstand zu einem Hindernis. Unterhalb des vorgegebenen Grenzwertes erfolgt dagegen die Abstandsbestimmung unter Einbezug der Meßwerte des Wegsensors.

Durch Vergleich der Meßkontur (=Hinderniskontur) mit der gespeicherten Fahrzeugkontur wird vorteilhaft der kürzeste Abstand zu einem Hindernis erfaßt. Dadurch werden auch am Fahrzeugrand stehende Hindernisse in die Auswertung mit einbezogen. Besonders vorteilhaft ist weiter, daß durch die doppelte Messung des Abstandes mittels des Ultraschallsensors und den Vergleich mit einer definierten Wegstecke, die durch den Wegsensors gemessen wird, eine Eichung für die Abstandsmessung durchführbar ist. Durch einfache Mittelwertbildung kann dabei ein Korrekturfaktor gebildet werden, der für den entsprechenden Meßbereich den Abstandswert korrigiert. Dabei kann vorteilhaft die Korrektur derart ausgeführt werden, daß aus Sicherheitsgründen ein minimaler Abstand bewertet wird.

Eine vorteilhafte Anwendung der Abstandsmessung ist bei einer Parkhilfe gegeben, die als Einparkhilfe oder Ausparkhilfe verwendbar ist.

Vorteilhaft ist weiter, die Anzeige oder die Einparkhilfe nur bei kleinen Geschwindigkeiten zu aktivieren. Bei größeren Geschwindigkeiten werden auch größere Abstände eingehalten, so daß eine Messung von kurzen Abständen nicht mehr erforderlich ist. Diese Schwelle kann dynamisch mittels der ABS-Sensoren definiert werden.

### Zeichnung

Ein Ausführungsbeispiel der Erfindung ist in der Zeichnung dargestellt und in der nachfolgenden Beschreibung näher erläutert. Es zeigen Figur 1 ein Blockschaltbild der Schaltungsanordnung, Figur 2 zeigt eine Anordnung an einem Fahrzeug, Figur 3 zeigt ein erstes Diagramm, Figur 4 zeigt ein zweites Diagramm und Figur 5 zeigt ein Flußdiagramm.

### Beschreibung des Ausführungsbeispiels

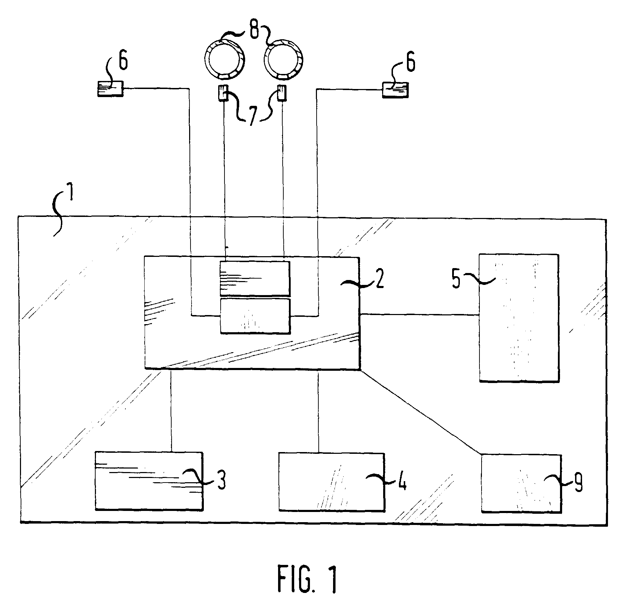

Das Blockschaltbild der Figur 1 zeigt eine Auswerteschaltung 1, die einen Mikrorechner 2 mit einem Programmspeicher 5 aufweist.

In dem Programmspeicher 5 ist ein Steuerprogramm enthalten, das zur Meßwerterfassung und Auswertung verwendet wird. Die Auswerteschaltung 1 hat weiterhin einen Fahrzeugkonturspeicher 3 sowie einen Meßkonturspeicher 4, die mit dem Mikrorechner 2 verbunden sind. Der Mikrorechner 2 ist auch mit einer Anzeige 9 verbunden, auf der Abstandswerte angezeigt werden. Der Mikrorechner 2 ist eingangsseitig mit einem oder mehreren Ultraschallsensoren 6 verbunden. Des weiteren ist einer oder mehrere Wegsensoren 7 mit dem Mikrorechner verbunden. Die Wegsensoren sind zweckmäßigerweise an den Rädern oder dem Getriebe des Fahrzeugs angekoppelt. Sie geben digitale oder analoge Signale in Abhängigkeit von der zurückgelegten Wegstrecke des Fahrzeugs ab. Der Wegsensor 7 ist beispielsweise mit dem Rad 8 der Hinterachse des Fahrzeugs verbunden. Bei Verwendung von analogen Wegsignalen sind zur Anpassung an den Mikrorechner 2 entsprechende Analog-/Digital-Wandler vorzusehen. Die Ansteuerung des Ultraschallsensors 6 ist per se beispielsweise aus der EP 48 958 B1 bekannt und muß daher nicht näher erläutert werden.

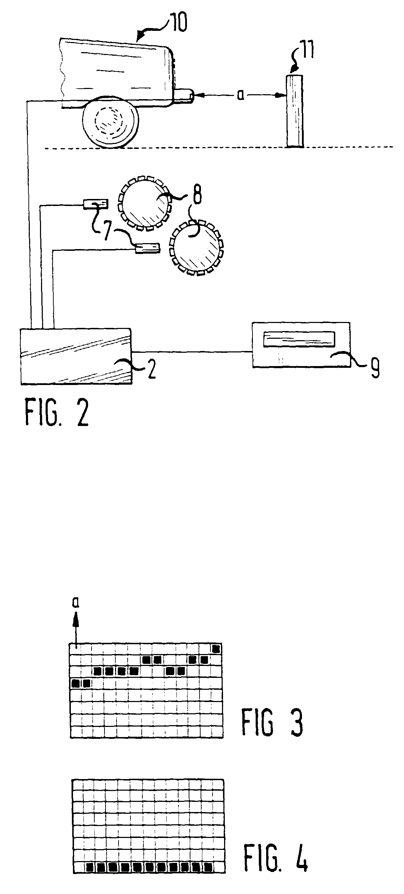

Figur 2 zeigt ein Fahrzeug 10, das den Abstand a zu einem Hindernis 11 hat. Dieser Abstand wird im Nahbereich vom Mikrorechner 2 über die Radsensoren 7 an den Rädern gemessen. Vorteilhaft ist, wenn dieser Sensor bereits für eine andere Baugruppe wie ABS oder für den Tachometer vorgesehen ist, so daß kein zusätzlicher Wegsensor verwendet werden muß. Der Rechner 2 ist mit einer Anzeige 9 verbunden, auf der entweder optische Entfernungsangaben, Warnhinweise oder akustische Warnzeichen ausgegeben werden.

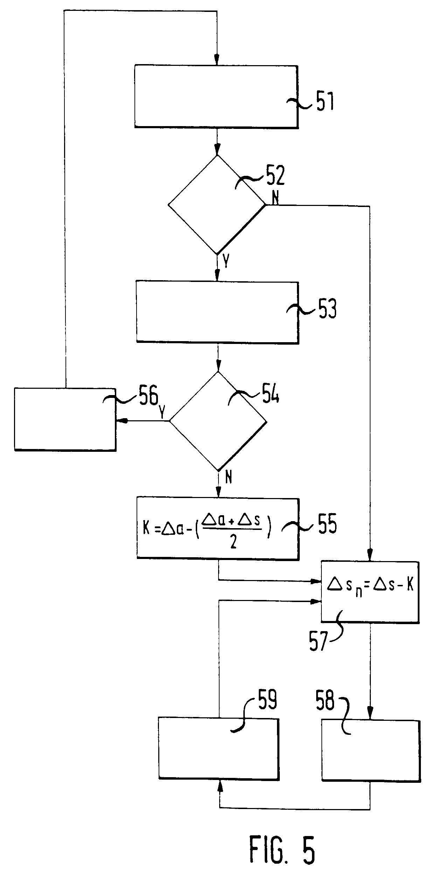

Anhand der Figuren 3 bis 5 wird die Funktion der Schaltungsanordnung näher erläutert. Das Flußdiagramm der Figur 5 zeigt einen prinzipiellen Ablauf der Abstandsbestimmung. Zunächst erfolgt oberhalb eines vorgegebenen Grenzwertes g die Abstandsmessung zwischen dem Fahrzeug 10 und dem Hindernis 11 nach dem bekannten Ultraschall-Meßverfahren. Figur 5 zeigt in Position 51 die Erfassung des momentanen Abstands a oder ggf. die Differenz Δa zum vorherigen Meßzyklus. In Position 52 wird nun geprüft, ob der Abstand a größer oder gleich dem Grenzwert g ist. Ist der Abstand größer, dann wird der Abstand bzw. die Differenz zur vorherigen Messung s bzw. Δs bestimmt. In Position 54 wird die Änderung Δa mit Δs verglichen. Sind diese beiden Werte in etwa gleich groß, dann kann davon ausgegangen werden, daß die Abstandsbestimmung richtig ist. Dieser erfaßte Abstandswert wird dann über eine Anzeige 56 akustisch oder optisch direkt oder als Warnsignal ausgegeben. Anschließend beginnt der Vorgang wieder in Position 51 mit der nächsten Messung.

Werden in Position 54 jedoch unterschiedliche Abstände gemessen, dann muß zunächst geprüft werden, ob Plausibilitätsforderungen erfüllt sind. Es kann nämlich vorkommen, daß ein Fußgänger in das Meßfeld gerät und dann das Meßergebnis des Ultraschallsensors sehr stark von dem des Wegsensors abweicht. In diesem Fall hat der Ultraschallsensor die höhere Priorität und bewertet den Abstand zum Fußgänger.

Liegen die beiden Meßwerte jedoch innerhalb eines Toleranzbereiches, dann kann durch Ermittlung eines Korrekturfaktors K eine Eichung für die Abstandsmessung durchgeführt werden. In Position 55 wird daher der Korrekturfaktor K aus dem Mittelwert der beiden Abstände Δa und Δs gebildet und den Mittelwert vom Abstand Δa abgezogen. Dieser Korrekturfaktor K wird dann später für die Korrektor des Wegstreckensensors verwendet.

Befindet sich das Hindernis im Nahbereich des Fahrzeuges, was in Position 52 festgestellt wurde, dann wird in Position 57 vom Meßergebnis ein korrigierter Meßwert Δsₙ gebildet, wobei vom aktuellen Abstand der Korrekturwert K subtrahiert wird. Die Subtraktion des Korrekturwertes vom aktuellen Wert Δs erscheint sinnvoll, damit der angezeigte Meßwert kleiner oder höchstens gleich groß ist wie der tatsächliche Abstand zum Hindernis. Dadurch wird sichergestellt, daß keine Kollision auftreten kann. Der korrigierte Wert wird auf der Anzeige Position 58 angezeigt. Danach erfolgt in Position 59 eine erneute Messung, diese wird wieder in Position 57 korrigiert und entsprechend in Position 58 angezeigt. Dieses kann sich bis zum Abstand 0 wiederholen.

Figur 3 zeigt ein Diagramm, bei dem ein Hindernisbild über den Abstand a in der Umgebung des Fahrzeuges in Fahrtrichtung gespeichert ist. Man erkennt mehrere Hindernisse mit unterschiedlichem Abstand. In Figur 4 ist eine Umgebungskontur des Fahrzeuges dargestellt, die der Stoßstange des Fahrzeuges entspricht. Diese Kontur ist in dem Speicher 3 gespeichert und wird mit der gemessenen Kontur, die im Speicher 4 abgelegt ist, verglichen. Dabei wird bevorzugt der jeweils kürzeste Abstand zu der Fahrzeugkontur in Fahrtrichtung erfaßt. Die Fahrzeugkontur gemäß der Figur 4 ist feststehend und wird einmal beim Einbau der Einparkhilfe eingegeben. Die Meßkontur ändert sich laufend in Abhängigkeit von den erfaßten Hindernissen. Sie wird beispielsweise bei der Erfassung der Abstände Δa in Position 51 ermittelt. Da beim Einparken oder Ausparken nur kleine Geschwindigkeiten gefahren werden, genügt es, wenn die Abstandsanzeige oder die Abstandsmessung nur bis zu einer bestimmten Fahrzeuggeschwindigkeit aktiviert wird. Sollten dagegen bei größeren Geschwindigkeiten auch größere Abstände gemessen werden, dann empfiehlt es sich, den Meßbereich für die Anzeige so zu wählen, daß auch größere Abstände angezeigt werden können. Für diesen Fall genügt es, die Anzeige ab einem bestimmten Mindestgeschwindigkeitswert zu aktivieren.

## Patentansprüche

1. Schaltungsanordnung für ein Kraftfahrzeug mit einem Ultraschallsensor (6), mit einer Auswerteschaltung (1) und mit einer Warnanzeige (9) für die Ausgabe des Abstandes (a) des Kraftfahrzeugs zu einem Hindernis, dadurch gekennzeichnet, daß das Kraftfahrzeug (10) wenigstens einen Wegsensor (7) aufweist und daß die Auswerteschaltung (1) Mittel (2, 3, 4) enthält, mit denen aus den Signalen des Wegsensors (7) der Abstand (a) im unmittelbaren Nahbereich des Kraftfahrzeugs (10) bestimmbar ist.

2. Schaltungsanordnung nach Anspruch 1, dadurch gekennzeichnet, daß die Mittel (2, 3, 4) ausgebildet sind, oberhalb eines vorgegebenen Grenzwertes den Abstand durch eine Ultraschall-Laufzeitmessung zu bestimmen.

3. Schaltungsanordnung nach einem der vorhergehenden Ansprüche, dadurch gekennzeichnet, daß die Mittel (2, 3, 4) ausgebildet sind, innerhalb der vorgegebenen Meßgrenze den Abstand (a) durch eine Modellrechnung unter Zuhilfenahme der Signale des Wegsensors (7) und der Ultraschall-Laufzeitmessung zu bestimmen.

4. Schaltungsanordnung nach einem der vorhergehenden Ansprüche, dadurch gekennzeichnet, daß die Mittel (2, 3, 4) einen Mikrorechner (2), einen Konturspeicher (3) und/oder einen Meßwertspeicher (4) enthalten.

5. Schaltungsanordnung nach Anspruch 4, dadurch gekennzeichnet, daß in dem Konturspeicher (3) die Fahrzeugkontur gespeichert ist und der Abstand des der Fahrzeugkontur am nächsten liegenden Hindernisses bewertbar ist.

6. Schaltungsanordnung nach einem der Ansprüche 2-5, dadurch gekennzeichnet, daß die Mittel (2, 3, 4) ausgebildet sind, oberhalb des Grenzwertes die Abstandswerte des Ultraschall-Sensors (6) mit den Wegsignalen des Wegsensors (7) zu vergleichen und durch Mittelwertbildung ein Korrekturwert (K) gebildet wird, mit dem die nachfolgenden Abstandsmessungen korrigierbar sind.

7. Schaltungsanordnung nach Anspruch 6, dadurch gekennzeichnet, daß der Ultraschall-Sensor (6) und/oder der Wegsensor (7) bei einem definierten Abstand, vorzugsweise 0 cm, eichbar sind.

8. Schaltungsanordnung nach einem der vorhergehenden Ansprüche, dadurch gekennzeichnet, daß sie als Einparkhilfe oder Ausparkhilfe verwendbar ist.

9. Schaltungsanordnung nach einem der vorhergehenden Ansprüche, dadurch gekennzeichnet, daß die Auswerteschaltung oder die Anzeige bei Erreichen einer vorgegebenen Minimal- oder Maximalgeschwindigkeit abschaltbar ist.

## Claims

1. Circuit arrangement for a motor vehicle, having an ultrasonic sensor (6), having an evaluation circuit (1) and having a warning display (9) for the output of the distance (a) of the vehicle from an obstacle, characterized in that the motor vehicle (10) has at least one displacement sensor (7) and characterized in that the evaluation circuit (1) has means (2, 3, 4) with which the distance (a) can be determined, in the immediate near range of the motor vehicle (10), from the signals of the displacement sensor (7).

2. Circuit arrangement according to Claim 1, characterized in that the means (2, 3, 4) are designed to determine the distance, above a predetermined limiting value, by means of an ultrasonic transit time measurement.

3. Circuit arrangement according to one of the preceding claims, characterized in that the means (2, 3, 4) are designed to determine the distance (a), within the predetermined measuring limit, by means of a model calculation, with the aid of the signals of the displacement sensor (7) and the ultrasonic transit time measurement.

4. Circuit arrangement according to one of the preceding claims, characterized in that the means (2, 3, 4) contain a microcomputer (2), a contour memory (3) and/or a measured value memory (4).

5. Circuit arrangement according to Claim 4, characterized in that the vehicle contour is stored in the contour memory (3) and the distance of the object located closest to the vehicle contour can be assessed.

6. Circuit arrangement according to one of Claims 2 - 5, characterized in that the means (2, 3, 4) are designed to compare the distance values of the ultrasonic sensor (6) with the distance signals of the displacement sensor (7), above the limiting value, and by averaging, a correction value (K) is formed with which the subsequent distance measurements can be corrected.

7. Circuit arrangement according to Claim 6, characterized in that the ultrasonic sensor (6) and/or the displacement sensor (7) can be calibrated at a defined distance, preferably 0 cm.

8. Circuit arrangement according to one of the preceding claims, characterized in that it can be used as a parking aid or unparking aid.

9. Circuit arrangement according to one of the preceding claims, characterized in that the evaluation circuit or the display can be switched off upon reaching a predetermined minimum or maximum speed.

## Revendications

1. Dispositif de commutation pour un véhicule automobile comprenant un capteur à ultrasons (6) avec un circuit d'exploitation (1) et un affichage avertisseur (9) pour émettre la distance (a) entre le véhicule et un obstacle,
caractérisé en ce que
le véhicule (10) comporte au moins un capteur de course (7) et le circuit d'exploitation (1) comporte des moyens (2, 3, 4) à l'aide desquels à partir des signaux du capteur de course (7) on détermine la distance (a) à proximité immédiate du véhicule (10).

2. Dispositif selon la revendication 1,
caractérisé en ce que
les moyens (2, 3, 4) sont conçus pour qu'au-dessus d'une valeur limite prédéterminée, ils déterminent la distance par une mesure de temps de parcours de signaux d'ultrasons.

3. Dispositif selon l'une des revendications précédentes,
caractérisé en ce que
les moyens (2, 3, 4) sont réalisés pour qu'à l'intérieur de la limite de mesure prédéterminée, on détermine la distance (a) par un calcul de modèle en utilisant les signaux du capteur de course (7) et la mesure du temps de parcours des ultrasons.

4. Dispositif selon l'une des revendications précédentes,
caractérisé en ce que
les moyens (2, 3, 4) comportent un microcalculateur (2), une mémoire de contour (3) et/ou une mémoire de valeur de mesure (4).

5. Dispositif selon la revendication 4,
caractérisé en ce que
le contour du véhicule est mis en mémoire dans la mémoire de contour (3) et on exploite la distance par rapport à l'obstacle le plus proche du contour du véhicule.

6. Dispositif selon l'une des revendications 2 à 5,
caractérisé en ce que
les moyens (2, 3, 4) sont réalisés pour qu'au-dessus de la valeur limite, les valeurs de distance du capteur à ultrasons (6) soient comparées aux signaux de course du capteur de course (7) et qu'en formant la moyenne on forme une valeur de correction (K) avec laquelle on corrige les mesures de distance suivantes.

7. Dispositif selon la revendication 6,
caractérisé en ce que
le capteur à ultrasons (6) et/ou le capteur de course (7) peuvent être tarés à un intervalle déterminé de préférence à 0 cm.

8. Dispositif selon l'une des revendications précédentes,
caractérisé en ce qu'
il est utilisé comme moyen d'assistance de rangement ou de sortie d'emplacement de parking.

9. Dispositif selon l'une des revendications précédentes,
caractérisé en ce que
le circuit d'exploitation ou le moyen d'affichage sont coupés lorsqu'on atteint une vitesse minimale ou maximale prédéterminée.
